# EUROPÄISCHE PATENTANMELDUNG

(11) **EP 4 653 632 A1**
(43) Veröffentlichungstag der Anmeldung: **26.11.2025**
(21) Anmeldenummer: 25178112.6
(22) Anmeldetag: 22.05.2025
(51) Int. Cl.: E04D 11/02, C08G 18/64, C09D 195/00

(54) **VERFAHREN ZUR SANIERUNG VON WÄRMEGEDÄMMTEN FLACHDÄCHERN UNTER GLEICHZEITIGER VERBESSERUNG DES BRANDSCHUTZES UND DACHAUFBAU MIT INTUMESZIERENDER DACHBESCHICHTUNG**

(30) Priorität: 23.05.2024 DE 102024114433
(71) Anmelder: FRANKEN SYSTEMS GmbH, 97258 Gollhofen (DE)
(72) Erfinder: Luckert, Sven, 97320 Sulzfeld (DE); Dr. Schobben, Christian, 48268 Greven (DE); Dr. Schäfer, Julian, 97204 Höchberg (DE); Budesheim, Gohar, 97318 Kitzingen (DE)
(74) Vertreter: Gleim Petri Patent- und Rechtsanwaltspartnerschaft mbB

(57) **Zusammenfassung**

Verfahren zur Sanierung von wärmegedämmten Flachdächern umfassend den Schritt Aufbringen einer intumeszierenden Dachabdichtung (4) auf eine Flachdachkonstruktion mit Dampfsperre (1), Wärmedämmung (2) und Abdichtung auf Basis von Abdichtungsbahnen (3), dadurch gekennzeichnet, dass die intumeszierende Dachabdichtung (4) 2 bis 15 Gew%, vorzugsweise 3 bis 9 Gew%, besonders bevorzugt 4 bis 8 Gew% Blähgraphit bezogen auf das Gesamtgewicht des Flüssigkunststoffs enthält, wobei das Aufbringen der intumeszierenden Dachabdichtung (4) in flüssiger Form erfolgt.

## Beschreibung

Gegenstand der Erfindung ist ein Verfahren zur Sanierung von wärmegedämmten Flachdächern durch Aufbringen einer flüssig aufzubringenden intumeszierenden Dachabdichtung zwecks nachträglicher Installation von Photovoltaik-Elementen. Gegenstand der vorliegenden Erfindung ist auch ein Dachaufbau bestehend aus Wärmedämmung, bituminöser Abdichtung, einer intumeszierenden Brandschutzschicht auf Basis eines Flüssigkunststoffs sowie Photovoltaik-Elementen mit zugehörigem Ständerwerk.

Der zukünftige Bedarf für Photovoltaik-Anlagen auf Flachdächern zeichnet sich als eine dringende Notwendigkeit ab, die maßgeblich durch den Klimawandel, steigende Energiepreise und verschärfte gesetzliche Auflagen beeinflusst wird. Dieser Bedarf erstreckt sich sowohl auf bereits bestehende Gebäude als auch auf neu zu errichtende Strukturen. Insbesondere die Installation von Photovoltaik-Anlagen auf Flachdächern wird in Anbetracht dieser Entwicklungen zu einer unverzichtbaren Maßnahme, um den stetig steigenden Energiebedarf zu decken und gleichzeitig den ökologischen Fußabdruck zu verringern.

Bei Neubauten bietet sich die Möglichkeit, Photovoltaik-Anlagen unter besonderer Berücksichtigung des vorbeugenden Brandschutzes zu integrieren, was einen langfristigen und sicheren Betrieb gewährleistet. Jedoch stellt sich bei Sanierungen eine herausfordernde Situation dar: die geltenden Brandschutzregelungen zum Zeitpunkt der Erstellung werden zwar während der Sanierung eingehalten, jedoch erfolgt dies gänzlich ohne Berücksichtigung der zusätzlichen Risiken im Zusammenhang mit dem Betrieb von nachträglich installierten Photovoltaik-Anlagen. Diese Risiken sind beträchtlich, da es im Falle eines Kurzschlusses zu langandauernden Lichtbogenentladungen kommt, die brandursächlich sind. Im Hinblick auf eine Brandausbreitung sind diesbezüglich Flachdächer mit Dachabdichtungen auf Basis von bituminösen Dachbahnen besonders kritisch zu bewerten, insbesondere wenn zusätzlich brennbare Dämmstoffe vorhanden sind.

Für bestehende Flachdächer, bei denen aus Gründen der Statik keine Kiesaufschüttung aufgebracht werden kann, gibt es aktuell keinerlei Möglichkeiten zur Nachrüstung mit Photovoltaik-Elementen unter Einhaltung der aktuellen Brandschutzrichtlinien.

Aufgabe der vorliegenden Erfindung war daher die Bereitstellung eines Verfahrens zur Sanierung von wärmegedämmten Fachdächern unter gleichzeitiger Verbesserung des Brandschutzes zwecks nachträglicher Installation von Photovoltaik-Elementen. Diese Aufgabe konnte mit der Bereitstellung des nachstehend näher beschriebenen Verfahrens gelöst werden.

Gegenstand der Erfindung ist ein Verfahren zur Sanierung von wärmegedämmten Flachdächern durch Aufbringen einer flüssig aufzubringenden intumeszierenden Dachabdichtung. Gegenstand der vorliegenden Erfindung ist auch ein Dachaufbau.

Im erfindungsgemäßen Verfahren können beliebige Flachdachkonstruktionen brandschutztechnisch optimiert werden, da durch Aufbringen der zusätzlichen intumeszierenden Dachabdichtung nur eine vernachlässigbare zusätzliche statische Last aufgebracht wird. Flachdächer im Sinne der vorliegenden Erfindung sind unbelüftete Dachkonstruktionen mit einem Gefälle von 2% bis 20% (Warmdächer). Die Flachdachkonstruktion beinhaltet im Sinne der vorliegenden Erfindung eine Dampfsperre, die inhärent im Baumaterial vorhanden ist oder als zusätzliche Folie vorhanden ist.

Als Wärmedämmung können im erfindungsgemäßen Verfahren beliebige brennbare und nicht brennbare Dämmstoffe auf der Flachdachkonstruktion vorhanden sein. Als nicht brennbare Dämmstoffe seien in diesem Zusammenhang Mineralwolle und Steinwolle genannt. Als brennbare Dämmstoffe seien Polystyrol-Dämmstoffe wie XPS oder EPS genannt, Holzdämmstoffe sowie Polyurethan-Dämmstoffe wie PUR oder PIR. Das erfindungsgemäße Verfahren ist in besonderem Maße geeignet für besonders gefährdete Flachdächer mit einer Wärmedämmung auf Basis von Polystyrol-Kunststoffen.

Als Abdichtungsbahn sind alle handelsüblichen bahnenförmigen Abdichtungsmaterialien auf Polymer- oder Bitumenbasis im erfindungsgemäßen Verfahren einsetzbar, wobei die Abdichtungsbahn gegebenenfalls auch mehrschichtig aufgebracht sein kann. Als bituminöse Abdichtungsbahnen seien in diesem Zusammenhang Elastomer- und Polymer-Bitumen-Bahnen genannt. Als polymere Abdichtungsbahnen seien beispielsweise Bahnen auf Basis von Polyvinylchlorid - PVC- genannt, Polyolefinbahnen wie TPO- oder FPO-Bahnen, Ethylen-Vinylacetatbahnen -EVA-, oder Kautschukbahnen auf Basis von Ethylen-Propylen-Dien Monomeren, EPDM-Bahnen. Das erfindungsgemäße Verfahren ist in besonderem Maße geeignet für besonders gefährdete Flachdächer mit mindestens einer Abdichtungsbahn auf Bitumen-Basis.

Die intumeszierende Dachabdichtung wird im Rahmen des erfindungsgemäßen Verfahrens als neue Renovierungsschicht auf den bestehenden Dachaufbau mit Dämmschicht und Abdichtungsschicht als flüssig aufzubringende Dachabdichtung unter Verwendung von Flüssigkunststoffen aufgebracht. Im Rahmen der vorliegenden Erfindung wurde die überraschende Beobachtung gemacht, dass die nachstehend näher beschriebene intumeszierende Dachabdichtungsschicht den darunterliegenden Dachaufbau höchst effizient vor einem Brand schützen kann und eine Brandausbreitung zuverlässig verhindert. Im Rahmen entsprechender Brandversuche konnte gezeigt werden, dass die Schutzwirkung der intumeszierenden Dachabdichtung ausreicht, um brandtechnisch besonders kritische Aufbauten mit bituminösen Dachabdichtungen und Wärmedämmungen auf Basis von Polystyrolkunststoffen zuverlässig vor einer Brandausbreitung zu schützen. Mit Hilfe des erfindungsgemäßen Verfahrens wird es möglich, beliebige ältere Dachaufbauten brandschutztechnisch dahingehend zu optimieren, dass ein gefahrloser Betrieb von Photovoltaik-Anlagen auf diesen Dachaufbauten möglich wird.

Zur Herstellung der intumeszierende Dachabdichtung werden erfindungsgemäß Flüssigkunststoffe eingesetzt, die als Flammschutzadditiv Blähgraphit enthalten.

Zur Ausrüstung (Additivierung) mit Blähgraphit können die nachfolgend näher charakterisierten Flüssigkunststoffe verwendet werden, die den Anforderungen der EOTA-Leitlinie ETAG Nr. 005 (Leitlinie für die europäische Technische Zulassung für flüssig aufzubringende Dachabdichtungen) genügen. Grundsätzlich legt die EOTA-Leitlinie ETAG 005 auch die Mindestanforderungen an den Brandschutz mit Bezugnahme auf die EN 13501-1 fest. Im Rahmen der vorliegenden Erfindung hat sich gezeigt, dass die erfindungsgemäß einzusetzenden intumeszierenden Dachabdichtungen (4) diese Mindestanforderungen erheblich übertreffen, eine Brandausbreitung effizient verhindern und darüber hinaus die darunter liegenden Schichten des Dachaufbaus und die Dachkonstruktion zuverlässig schützen.

Bei den Flüssigkunststoffen, die während der Formulierung oder nachträglich mit Blähgraphit additiviert werden können, handelt es sich um wässrige oder bevorzugt weitestgehend lösemittelfreie reaktive Beschichtungsmaterialien des Standes der Technik, die den Anforderungen der EOTA-Leitlinie ETAG 005 entsprechen.

Im Rahmen der vorliegenden Erfindung bevorzugt geeignet zur Herstellung der intumeszierenden Dachabdichtung sind reaktive, weitgehend lösemittelfreie Flüssigkunststoffe, die durch radikalische Polymerisation, Polyaddition oder SilanPolykondensation unter Umgebungsbedingungen aushärten. Dies sind typischerweise einkomponentige oder zweikomponentige Flüssigkunststoffe auf Basis von ungesättigten Polyestern oder Acrylatcopolymeren und besonders bevorzugt auf Basis von Polyurethanen.

In derartigen Flüssigkunststoffen werden bisher ganz überwiegend Aluminiumhydroxid und Magnesiumhydroxid als feste Flammschutzmittel verwendet. Die mögliche Verwendung von Blähgraphit in reaktiven Flüssigkunststoffen - bevorzugt in Kombination mit Aluminiumhydroxid und Magnesiumhydroxid - zur Herstellung von intumeszierenden, flüssig aufzubringenden Dachabdichtungen ist bisher nicht bekannt.

Geeignete Flüssigkunststoffe auf Basis von ungesättigten Acrylatcopolymeren enthalten typischerweise größere Mengen an Methylmethacrylat, ungesättigte Acrylat- und/oder Methacrylatcopolymere und ggf. weitere Ester der Acrylsäure und/oder Methacrylsäure. Die Aushärtung erfolgt 2-komponentig durch Zugabe von organischen Peroxiden insbesondere Dibenzoylperoxid. Flüssigkunststoffe auf Basis von ungesättigten Acrylatcopolymeren werden beispielhaft beschrieben in der koreanischen Patentschrift KR101192384 B1 oder der WO2021181117A1.

Geeignete Flüssigkunststoffe auf Basis von Polyurethanen sind die an sich bekannten ein- und zweikomponentigen Beschichtungsmassen auf Basis von aromatischen und/oder aliphatischen Polyisocyanaten mit Polyolen und/oder Polyaminen. Geeignet sind beispielsweise einkomponentige Polyurethan-Flüssigkunststoffe auf Basis von Isocyanatprepolymeren, die durch Einwirkung von Luftfeuchtigkeit unter Harnstoffbildung aushärten. Weiterhin geeignet sind einkomponentige Polyurethanflüssigkunststoffe, die neben Polyisocyanaten und Polyisocyanatprepolymeren Polyoxazolidine, Polyaldimine und/oder Polyketimine enthalten. Derartige einkomponentige Polyurethansysteme sind beschrieben in der WO2016005457A1, der WO2014114640A1, der WO2014114642A1, der WO2014114643A1, der WO2014114641 A1.

Bevorzugt geeignete einkomponentige Polyurethan-Flüssigkunsstoffe basieren auf Alkoxysilan-funktionalisierten Polyurethanen und härten durch Silanpolykondensation aus. Derartige Alkoxysilan-funktionalisierte Polyurethane werden beispielhaft beschrieben in der EP-A 1 987 108, EP-A 2 352 776 und EP-A 2 561 024 sowie der WO 2019 114990 A1 und können gegebenenfalls auch zweikomponentig formuliert werden, so wie dies beispielhaft in der EP4063421A1 beschrieben ist.

Weiterhin geeignete einkomponentige Flüssigkunststoffe sind Alkoxysilan-funktionalisierte Polyether und/oder Acrylatpolymere, die ggf. in Kombination mit den o.g. Alkoxysilan-funktionalisierten Polyurethanen verwendet werden können.

Geeignete zweikomponentige Flüssigkunststoffe auf Basis von Polyurethanen bestehen aus einer Polyisocyanatkomponente und einer Polyolkomponente und/oder einer Polyaminkomponente. Geeignet sind beispielsweise zweikomponentige Flüssigkunststoffe auf Basis von Diphenylmethandiisocyanat und ggf. modifiziertem Ricinusöl sowie Flüssigkunststoffe auf Basis von aromatischen und/oder aliphatischen Polyisocyanatprepolymeren mit aromatischen Aminen wie Diethyltoluendiamin oder Dimethylthiotoluendiamin. Besonders bevorzugt geeignet sind zweikomponentige Polyurethan-Flüssigkunststoffe auf Basis von aliphatischen Polyisocyanaten und Polyasparaginsäureestern wie sie beispielhaft in der EP3115388B1 oder der WO2022253635A1 beschrieben sind.

Als wässrige Flüssigkunststoffe sind insbesondere 2-komponentige Beschichtungsmaterialien geeignet, bestehend aus einer wässrigen Polymerdispersion und einer Pulverkomponente, enthaltend ein mineralisches Bindemittelsystem. Derartige Produkte werden in den neueren Patentanmeldungen WO 2022 247993 A1 und WO 2022 248070 A1 beschrieben. In der WO 2022 247993 A1 werden im Rahmen der zur Formulierung einzusetzenden Brandverzögerer Blähgraphite und Aluminiumhydroxid pauschal genannt, jedoch sind der Veröffentlichung keinerlei Hinweise auf die im Rahmen der vorliegenden Erfindung speziell einsetzbaren Blähgraphite enthalten und auch keine Hinweise auf eine mögliche Verwendung bei der Herstellung von intumeszierenden Dachabdichtungen als Renovierungsschicht.

Zur Herstellung der erfindungsgemäß einzusetzenden intumeszierende Dachabdichtung werden die vorstehend beschriebenen Flüssigkunststoffe während der Formulierung oder auch nachträglich additiviert mit expandierbaren Graphit-Intercalationsverbindungen, die als Blähgraphit bekannt sind und im Handel erhältlich sind. Es handelt sich dabei um Verbindungen, die zwischen den Gitterschichten des Graphits eingelagerte Fremdbestandteile - Intercalate - enthalten. Solche expandierbaren Graphit-Intercalations-Verbindungen werden üblicherweise dadurch hergestellt, dass man Graphitteilchen in einer Lösung dispergiert, die ein Oxidationsmittel und die einzulagernde Gastverbindung enthält. Üblicherweise angewandte Oxidationsmittel sind Salpetersäure, Kaliumchlorat, Chromsäure, Kaliumpermanganat, Wasserstoffperoxid und dergleichen. Als einzulagernde Verbindung wird vielfach konzentrierte Schwefelsäure verwendet, wie dies beispielsweise in der EP0085121A1 beschrieben wird. Blähgraphit ist ein allgemein bekanntes Flammschutzadditiv, welches vielfach in Beschichtungsmitteln und Dichtstoffen für Brandschutzabdichtungen - meistens in Kombination mit Treibmitteln - eingesetzt wird. Beispielhaft für Anwendungen als expandierender Dichtstoff sei hier die EP3004197A1 exemplarisch genannt.

Erfindungsgemäß als Blähgraphite einsetzbar sind bekannte Einlagerungsverbindungen von SOₓ, NOₓ, Halogen und/oder Säuren in Graphit. Bevorzugt sind Blähgraphite, die bei einer Starttemperatur von 150 bis 300°C, vorzugsweise 180 bis 230°C unter Aufblähen SO₂, SO₃, NO und/oder NO₂ abgeben. Bevorzugt einsetzbare Blähgraphite weisen eine mittelgroße Kornverteilung auf, wobei 80% der Körner eine Korngröße >100 µm, bevorzugt >150 µm aufweisen. Besonders bevorzugt einsetzbare Blähgraphit-Typen enthalten kein Treibmittel und weisen ein Ausdehnungsvolumen von mehr als 100 cm³/g (1000°C) auf, bevorzugt mehr als 200cm³/g (1000°C).

Erfindungsgemäß werden die vorstehend charakterisierten Blähgraphite in Mengen von 2 bis 15 Gew%, vorzugsweise 3 bis 9 Gew%, besonders bevorzugt 4 bis 8 Gew% bezogen auf das Gesamtgewicht des Flüssigkunststoffs eingesetzt.

Die Einarbeitung des Blähgraphits in die erfindungsgemäß einsetzbaren Flüssigkunststoffe erfolgt typischerweise durch Dispergieren mittels Kreisdissolver. Hierbei wird Blähgraphit bevorzugt gegen Ende des Dispergierprozesses, also nach Zugabe aller anderen Füllstoffe und Pigmente bei niedriger Drehzahl eingearbeitet.

Die so erhaltenen erfindungsgemäßen Flüssigkunststoffe weisen nur ein geringfügig verändertes rheologisches Verhalten auf, insbesondere nur eine wenig erhöhte Viskosität. Somit ist es möglich, erfindungsgemäß geeignete Flüssigkunststoffe auch nachträglich mit Blähgraphit auszurüsten.

Im erfindungsgemäßen Verfahren wird auf die existierende Dachkonstruktion eines Flachdachs, bestehend aus Dachkonstruktion mit Dampfsperre, Wärmedämmung und Abdichtungsschicht auf Basis von Dachbahnen eine intumeszierende, flüssig aufzubringende Abdichtungsschicht aufgebracht. Nach deren Aushärtung werden darauf Solarmodule inklusive Ständerwerk nach gängigen Verfahren aufgebracht und gegebenenfalls befestigt.

Im erfindungsgemäßen Verfahren ist die vorhandene Abdichtungsschicht vor Aufbringen der zusätzlichen intumeszierenden Abdichtungsschicht zu reinigen und gegebenenfalls mit einem Haftprimer vorzubehandeln. Die Art des Haftprimers und dessen Applikation ist dabei vom jeweiligen Typ der vorhandenen Abdichtungsschicht abhängig. Insbesondere die vorstehend beschriebenen polymeren Abdichtungsbahnen müssen in der Regel mit einem Haftprimer vorbehandelt werden. Geeignete Haftprimer entsprechen dem Stand der Technik und werden beispielhaft beschrieben in der WO0238689A1, der WO 2002002703, der WO2007008890A2, der WO 9903907A1 oder als wässrige Formulierung in der DE4428382A1.

Im erfindungsgemäßen Verfahren wird im nächsten Arbeitsschritt die intumeszierende Abdichtungsschicht als einkomponentig oder zweikomponentig zu verarbeitender Flüssigkunststoff aufgebracht. Der Auftrag erfolgt dabei vorzugsweise in zwei Lagen, wobei nach Aufbringen der ersten Lage ein textiles Flächengewebe (Vliesarmierung) in die flüssige Beschichtung eingelegt wird und anschließend eine zweite Lage aufgebracht wird. Als textile Flächengewebe sind alle gewirkten, gestrickten, gewebten, geflochtenen, gehäkelten oder auf sonstige Art aus Garnen oder Fasern hergestellten Flächengebilde gemeint. Geeignete textile Flächengewebe basieren auf organischen oder anorganische Fasern, wie beispielsweise Glasfasern, Kohlefasern oder Kunststofffasern, wie beispielsweise Polyester-, Polyamid-, Aramid- oder Polyacrylatfasern, Metallfasern oder Fasern mit metallischen Bestandteilen o. dgl.. Vorzugsweise werden Vliesmaterialien eingesetzt wie Glasfaservliese oder Polyestervliese, besonders bevorzugt Glasfaservliese.

Im Rahmen der vorliegenden Erfindung hat es sich als vorteilhaft erwiesen, wenn die erste Lage der im erfindungsgemäßen Verfahren aufzubringenden intumeszierenden Dachabdichtung weniger Blähgraphit enthält als die zweite Schicht. Im Rahmen entsprechender Brandversuche hat sich gezeigt, dass in diesen Fällen die Beschichtung weniger stark aufplatzt und somit weniger Sauerstoff an die darunterliegenden Schichten und gelangt. In einer besonderen Ausführungsform der vorliegenden Erfindung enthält die erste Lage der im erfindungsgemäßen Verfahren aufzubringenden intumeszierenden Dachabdichtung kein Blähgraphit, nur die zweite Lage enthält Blähgraphit im Sinne der vorstehend gemachten Angaben. Hierbei unterscheiden sich die Flüssigkunststoffe der ersten und der zweiten Schicht lediglich hinsichtlich des Gehaltes an Blähgraphit. Die im erfindungsgemäßen Verfahren einzusetzenden intumeszierenden Dachabdichtungen werden im Allgemeinen so aufgebracht, dass eine Mindestschichtdicke der ausgehärteten Beschichtung von 2mm erreicht wird. Die Zusammensetzung der intumeszierenden Dachabdichtung (4) und deren Verarbeitung sind dabei vorzugsweise so ausgestaltet, dass die Anforderungen der EOTA Leitlinie ETAG 005 vollumfänglich erfüllt werden, so dass die brandschutztechnisch optimierten Dachkonstruktionen eine voraussichtliche Lebensdauer von 25 Jahren haben. Im Übrigen entsprechen die brandschutztechnisch optimierten Dachkonstruktionen den aktuellen Anforderungen an den Brandschutz und sind somit ideal geeignet zur nachträglichen Installation von Photovoltaik-Anlagen.

Gegenstand der vorliegenden Erfindung ist somit auch ein wärmegedämmtes Flachdach bestehend aus
- Flachdachkonstruktion mit Dampfsperre
- Wärmedämmung
- Abdichtung auf Basis von Abdichtungsbahnen
- Intumeszierende Dachabdichtung auf Basis eines Flüssigkunststoffs
- Ständerwerk mit Photovoltaik-Anlage

### Patentbeispiele

### Beispiel 1 (erfindungsgemäß)

In einen handelsüblicher einkomponentigen Flüssigkunststoff auf Basis eines silanterminierten Polyurethans enthaltend 19 Gew% Aluminiumtrihydroxyd, (Frankosil^{®}1K PLUS der Fa. Franken Systems GmbH, Gollhofen) werden 5 Gew% Blähgraphit (BLG 250T der Fa. RMC Remacon GmbH, Säckingen, Starttemperatur 200°C, Expansionsrate>200cm³/g (1000°C), Kornverteilung 80% >250µm) mittels Kreisdissolver bei niedriger Drehzahl eingearbeitet.

### Beispiel 2 (erfindungsgemäß)

In die Polyasparaginsäureester-Komponente eines handelsüblichen Polyurethan-Flüssigkunststoffs auf Basis aliphatischer Polyisocyanate und Polyasparaginsäureestern enthaltend 15 Gew% Aluminiumtrihydroxyd, (Revopur WP200 der Fa. Franken Systems GmbH, Gollhofen) werden 5 Gew% Blähgraphit (BLG 250T der Fa. RMC Remacon GmbH) mittels Kreisdissolver bei niedriger Drehzahl eingearbeitet.

### Beispiel 3 (erfindungsgemäß)

In einen einkomponentigen Polyurethanflüssigkunststoff hergestellt gemäß Beispiel 1, WO 2014114642 A1, werden 6 Gew% Blähgraphit (BLG 300TS der Fa. RMC Remacon GmbH, Säckingen, Starttemperatur 180°C, Expansionsrate>400cm³/g (1000°C), Kornverteilung 80% >300µm) mittels Kreisdissolver bei niedriger Drehzahl eingearbeitet.

### Beispiel 4 (erfindungsgemäß)

In einen mittels Peroxid härtbaren handelsüblichen Flüssigkunststoff auf Basis Polymethylmethacrylat (Triflex ProDetail^{®} der Fa. Triflex GmbH & CoKG, Minden) werden 6 Gew% Blähgraphit Typ Ex 180 der Fa. NGS Trading & Consulting GmbH, Leinburg, Starttemperatur 185°C, Expansionsrate ca. 320 cm³/g (1000°C), Kornverteilung 90% >180µm) mittels Kreisdissolver in die Harzkomponente bei niedriger Drehzahl eingearbeitet.

### Brandversuche Serie 1 (erfindungsgemäß)

Die Blähgraphit enthaltenden Flüssigkunststoffe der Beispiele 1 bis 4 werden entsprechend den jeweiligen Verarbeitungsangaben auf einen Dachaufbau der Größe 1m * 1m, bestehend aus einem Trapezblech als Dachunterkonstruktion, 10mm EPS-Dämmplatten mit aufgeschweißter Bitumenbahn (BauderTEC KSA DUO 35 der Fa Bauder, Stuttgart, erste Abdichtungslage; Bauder PYE PV 200 55 S5 EN Schiefer der Fa. Bauder, Stuttgart, Oberlage) werden jeweils 1,7 kg der Blähgraphit enthaltenden Flüssigkunststoffe 1 bis 4 aufgebracht. In den noch nicht ausgehärteten Flüssigkunststoff wird ein Polyestervlies mit einem Flächengewicht von 110g/m² der Fa. Franken Systems GmbH, Gollhofen eingebettet. Anschließend werden weitere 1,7 kg der Blähgraphit enthaltenden Flüssigkunststoffe 1 bis 4 aufgebracht. Die so erhaltenen Musteraufbauten werden über 28 Tage bei einer Umgebungstemperatur von 20°C gelagert und dann einem Brandtest unterworfen.

### Durchführung der Brandtests:

Die abgelagerten Musteraufbauten werden für 10 Minuten beflammt mit Hilfe eines mit Propangas beheizten, im Dachdeckerhandwerk üblichen Gasbrenners mit einer Flammentemperatur von ca. 1500°C, wobei der Abstand zwischen Brenneraufsatz und Versuchsaufbau ca. 20 cm beträgt. Der Brandtests werden vorzeitig abgebrochen, sobald die Bitumenbahn beginnt zu brennen. Es erfolgte eine Bewertung der entsprechenden Brandtests entsprechend folgenden Merkmalen.

| Bewertung | Bedeutung |
|---|---|
| - | Abdichtung nach sehr kurzer Zeit nicht mehr intakt, brennt ggf. eigenständig weiter |
| 0 | Kurzzeitiger Widerstand bei Beflammung, geringe brandhemmende Wirkung |
| + | Guter Widerstand gegen Beflammung, gute brandhemmende Wirkung |
| ++ | Sehr hoher Widerstand gegen Beflammung, ausgeprägte brandhemmende Wirkung, Abdichtung nach 10 Minuten Beflammung intakt |

| **Brandversuche Serie 1** | |
|---|---|
| **Kombination aus Polyestervlies und** | **Bewertung** |
| Bsp. 1 | + |
| Bsp. 2 | ++ |
| Bsp. 3 | + |
| Bsp. 4 | + |

### Brandversuche Serie 2 (erfindungsgemäß)

Entsprechend der Versuchsserie 1 werden Versuchsaufbauten erstellt, aber anstelle des Polyestervlieses wird ein Glasgewebe mit einem Flächengewicht von 225g/m² verwendet. Die so erhaltenen Musteraufbauten werden über 28 Tage bei einer Umgebungstemperatur von 20°C gelagert und dann einem Brandtest unterworfen. Die Durchführung und Bewertung der Brandtests wurden entsprechend Beispiel 1 ausgeführt.

| **Brandversuche Serie 2** | |
|---|---|
| **Kombination aus Glasgewebe und** | **Bewertung** |
| Bsp. 1 | ++ |
| Bsp. 2 | ++ |
| Bsp. 3 | ++ |
| Bsp. 4 | + |

### Brandversuche Serie 3 (erfindungsgemäß)

Entsprechend der Versuchsserie 2 werden Versuchsaufbauten mit Glasgewebeeinlage erstellt, zunächst werden jeweils 1,7 kg des unmodifizierten Flüssigkunststoffs (ohne Blähgraphit) auf die Bitumenbahn aufgebracht, nach Einlage des Glasgewebes werden jeweils 1,7 kg des modifizierten Flüssigkunststoffs (mit Blähgraphit) aufgebracht. Die so erhaltenen Musteraufbauten werden über 28 Tage bei einer Umgebungstemperatur von 20°C gelagert und dann einem Brandtest unterworfen. Die Durchführungen der und Bewertungen der Brandtests wurde entsprechend Beispiel 1 ausgeführt.

| **Brandversuche Serie 3** | |
|---|---|
| **Kombination aus Polyestervlies und** | **Bewertung** |
| Bsp. 1 | ++ |
| Bsp. 2 | ++ |

### Brandversuche Serie 4 (nicht erfindungsgemäß)

Entsprechend der Versuchsserie 3 werden Versuchsaufbauten mit Glasgewebeeinlage erstellt, es werden aber jeweils nur die unmodifizierten Flüssigkunststoffe der Beispiele 1 bis 4 (ohne Blähgraphit) verwendet. Die Durchführungen und Bewertungen der Brandtests wurden entsprechend Beispiel 1 ausgeführt.

| **Brandversuche Serie 4** | |
|---|---|
| **Kombination aus Polyestervlies und** | **Bewertung** |
| Bsp. 1, unmodifiziert | 0 |
| Bsp. 2, unmodifiziert | 0 |
| Bsp. 3, unmodifiziert | 0 |
| Bsp. 4, unmodifiziert | 0 |

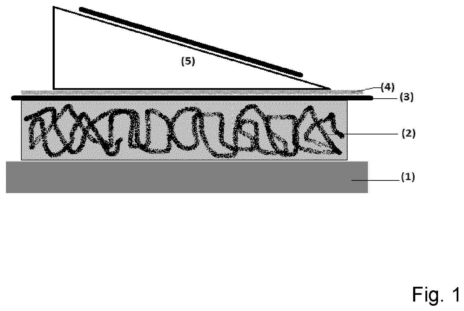

Die vorliegenden Erfindung wird auch im Zusammenhang mit der Fig. 1 erläutert. Dort gezeigt ist ein wärmegedämmtes Flachdach bestehend aus:
- Flachdachkonstruktion mit Dampfsperre 1
- Wärmedämmung 2
- Abdichtung auf Basis von Abdichtungsbahnen 3
- Intumeszierende Dachabdichtung auf Basis eines Flüssigkunststoffs 4
- Ständerwerk mit Photovoltaik-Anlage 5

## Patentansprüche

1. Verfahren zur Sanierung von wärmegedämmten Flachdächern umfassend den Schritt Aufbringen einer intumeszierenden Dachabdichtung (4) auf eine Flachdachkonstruktion mit Dampfsperre (1), Wärmedämmung (2) und Abdichtung auf Basis von Abdichtungsbahnen (3), **dadurch gekennzeichnet, dass** die intumeszierende Dachabdichtung (4) 2 bis 15 Gew%, vorzugsweise 3 bis 9 Gew%, besonders bevorzugt 4 bis 8 Gew% Blähgraphit bezogen auf das Gesamtgewicht des Flüssigkunststoffs enthält, wobei das Aufbringen der intumeszierenden Dachabdichtung (4) in flüssiger Form erfolgt.

2. Verfahren gemäß Anspruch 1, **dadurch gekennzeichnet, dass** eine intumeszierende Dachabdichtung (4) auf Basis von reaktiven Polymeren verwendet wird, die durch radikalische Polymerisation, Polyaddition oder SilanPolykondensation unter Umgebungsbedingungen aushärten.

3. Verfahren gemäß Anspruch 1, **dadurch gekennzeichnet, dass** eine flüssig aufzubringende intumeszierende Dachabdichtung (4) auf Basis von ungesättigten Polyestern, ungesättigten Acrylatcopolymeren oder Polyurethanen verwendet wird.

4. Verfahren gemäß Anspruch 1 bis 3, **dadurch gekennzeichnet, dass** die intumeszierende Dachabdichtung ferner Aluminiumtrihydroxid enthält.

5. Verfahren gemäß Anspruch 1 bis 3, **dadurch gekennzeichnet, dass** die intumeszierende Dachabdichtung ferner Aluminiumtrihydroxid in einer Menge von 5 bis 50 Gew%, enthält.

6. Verfahren gemäß Anspruch einem oder mehreren der Ansprüche 1 bis 5, **dadurch gekennzeichnet, dass** eine flüssig aufzubringende intumeszierende Dachabdichtung (4) auf Basis von Alkoxysilan funktionalisierten Polyurethanen verwendet wird.

7. Verfahren gemäß einem oder mehreren der Ansprüche 1 bis 6, **dadurch gekennzeichnet, dass** ferner ein textiles Flächengewebe aufgebracht wird.

8. Verfahren gemäß einem oder mehreren der Ansprüche 1 bis 7, **dadurch gekennzeichnet, dass** das textile Flächengewebe ein Glasgewebe umfasst.

9. Verfahren gemäß einem oder mehreren der Ansprüche 1 bis 8, **dadurch gekennzeichnet, dass** die intumeszierende Dachabdichtung (4) derart ausgebildet ist, dass die Anforderungen der EOTA-Leitlinie ETAG 005 erfüllt sind.

10. Verfahren gemäß einem oder mehreren der Ansprüche 1 bis 9, **dadurch gekennzeichnet, dass** die intumeszierende Dachabdichtung (4) zweilagig in Kombination mit einem textilen Flächengewebe appliziert wird, wobei die erste Lage 0 bis 2 Gew% Blähgraphit umfasst und die zweite Lage 4 bis 8 Gew% umfasst, jeweils bezogen auf das Gesamtgewicht des Flüssigkunststoffs.

11. Verfahren gemäß einem oder mehreren der Ansprüche 1 bis 10, **dadurch gekennzeichnet, dass** die Flachdachkonstruktion eine Abdichtungsbahn (3) auf bituminöser Basis umfasst

12. Verfahren gemäß einem oder mehreren der Ansprüche 1 bis 11, **dadurch gekennzeichnet, dass** die Flachdachkonstruktion eine Abdichtungsbahn (3) auf Basis von synthetischen Polymeren umfasst.

13. Verfahren gemäß einem oder mehreren der Ansprüche 1 bis 12, **dadurch gekennzeichnet, dass** die Flachdachkonstruktion eine Wärmedämmung auf Basis von Polystyrolkunststoffen umfasst.

14. Dachaufbau bestehend aus:
• Flachdachkonstruktion mit Dampfsperre (1)
• Wärmedämmung (2)
• Abdichtung auf Basis von Abdichtungsbahnen (3)
• Intumeszierende Dachabdichtung auf Basis eines Flüssigkunststoffs (4) das gemäß dem Verfahren aus Anspruch 1 bis 13 aufgebracht wurde
• Ständerwerk mit Photovoltaik-Anlage (5)
